# EUROPEAN PATENT APPLICATION

(11) **EP 3 220 553 A1**
(43) Date of publication of application: **20.09.2017**
(21) Application number: 15868060.3
(22) Date of filing: 07.07.2015
(51) Int. Cl.: H04B 7/04, H04B 7/06, H04B 7/08

(54) **ANTENNA AND ACTIVE ANTENNA SYSTEM**

(30) Priority: 11.12.2014 CN 201410765868
(71) Applicant: Huawei Technologies Co., Ltd., Longgang District Shenzhen, Guangdong 518129 (CN)
(72) Inventor: ZHAO, Jianping, Shenzen Guangdong 518129 (CN); XU, Xiao, Shenzen Guangdong 518129 (CN); GENG, Yang, Shenzen Guangdong 518129 (CN); WANG, Qiang, Shenzen Guangdong 518129 (CN); XIAO, Xuan, Shenzen Guangdong 518129 (CN)
(74) Representative: Gill Jennings & Every LLP
(86) International application number: PCT/CN2015/083456
(87) International publication number: WO 2016/090909

(57) **Abstract**

The present invention discloses an antenna and an active antenna system, so as to reduce complexity and power consumption of an antenna device, and reduce production costs. The antenna includes: an antenna array, a multichannel front-end, a multi-beam receiving network, and a multi-beam transmitting network; the antenna array includes w antenna elements, wherein w is a natural number greater than or equal to 2; the multi-beam transmitting network is configured to perform beamforming processing on j transmit signal beams, to obtain m transmit signals, wherein j is a natural number; the multichannel front-end is configured to convert w first radio-frequency signals received by the w antenna elements into n received signals, and convert the m transmit signals obtained by the multi-beam transmitting network into w second radio-frequency signals, wherein both n and m are natural numbers less than or equal to w; and the multi-beam receiving network is configured to perform beamforming processing on the n received signals generated by the multichannel front-end, to obtain k received signal beams, wherein k is a natural number.

## Description

This application claims priority to Chinese Patent Application No.201410765868.0, filed with the Chinese Patent Office on December 11, 2014 and entitled "ANTENNA AND ACTIVE ANTENNA SYSTEM", which is incorporated herein by reference in its entirety.

### TECHNICAL FIELD

The present invention relates to the field of mobile communications, and in particular, to an antenna and an active antenna system.

### BACKGROUND

Performance of a wireless network needs to be constantly improved to meet an ever-increasing social requirement on a wireless bandwidth. Use of an active antenna system can not only obtain a high-gain beam and a high user multiplexing rate, but also can provide a diversity gain on multiple channels, so as to obtain a high-performance wireless network. The active antenna system is gradually applied to a civilian technology.

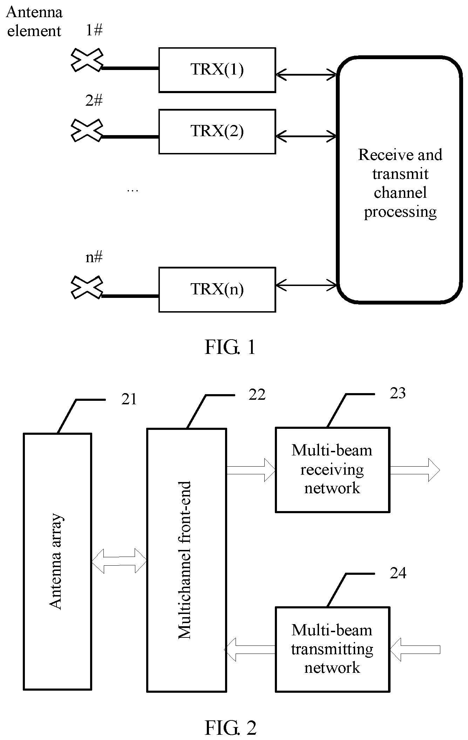

The active antenna system uses a large-scale antenna array to form multiple antenna beams, and therefore, is also referred to as an active multiple-antenna system. A key technology of the active multiple-antenna system is beamforming of the antenna array. Coherent signals of multiple channels control, by means of digital domain signal processing, amplitudes and phases of all array element signals in the antenna array, so as to perform spatial interference and superimposing to form a directional beam. The beam may be of a user-level or a cell-level. In a conventional technology architecture, one TRX (Transmitter/Receiver, transceiver) drives one or more antenna units, to form one active antenna module, and multiple modules form an array, that is, form an active antenna array. This is a so-called "one-drive-one" architecture. As shown in FIG. 1, on a transmit link, a first transmit signal reaches element 1# through TRX (1); and on a receive link, the first receive signal reaches receive channel processing through TRX (1). It can be seen that the first transmit signal and the first receive signal pass through symmetrical paths, and therefore, in the antenna, channels for receiving and transmitting signals are totally symmetrical in the "one-drive-one" architecture.

An antenna device including the antenna array in the "one-drive-one" solution has a complex structure, high power consumption, and high production costs.

### SUMMARY

The present invention provides an antenna and an active antenna system, so as to reduce complexity and power consumption of an antenna device, and reduce production costs.

A first aspect of the present invention provides an antenna, including an antenna array, a multichannel front-end, a multi-beam receiving network, and a multi-beam transmitting network, wherein
the antenna array includes w antenna elements, wherein the antenna element is configured to transmit or receive a radio-frequency signal, and w is a natural number greater than or equal to 2;
the multi-beam transmitting network is configured to perform beamforming processing on j transmit signal beams, to obtain m transmit signals, wherein j is a natural number;
the multichannel front-end is configured to: convert w first radio-frequency signals received by the w antenna elements into n received signals, and convert the m transmit signals obtained by the multi-beam transmitting network into w second radio-frequency signals, wherein both n and m are natural numbers less than or equal to w; and
the multi-beam receiving network is configured to perform beamforming processing on the n received signals generated by the multichannel front-end, to obtain k received signal beams, wherein k is a natural number.

With reference to the first aspect of the present invention, in a first implementation manner of the first aspect of the present invention, a same antenna element is used for transmitting or receiving a radio-frequency signal; and the multichannel front-end includes:
a filtering processing module, configured to perform filtering processing on one first radio-frequency signal in the w first radio-frequency signals or on one second radio-frequency signal in the w second radio-frequency signals;
a receive channel feeding network, configured to: form a receive channel, and perform first mapping processing on the w first radio-frequency signals in a receiving direction, to obtain the n received signals; and
a transmit channel feeding network, configured to: form a transmit channel, and perform second mapping processing on the m transmit signals in a transmission direction, to obtain the w second radio-frequency signals.

With reference to the first implementation manner of the first aspect of the present invention, in a second implementation manner of the first aspect of the present invention, the multichannel front-end further includes:
a switch matrix, configured to switch, in a time-division manner, the w first radio-frequency signals in the receiving direction and the w second radio-frequency signals in the transmission direction.

With reference to the first aspect of the present invention, in a third implementation manner of the first aspect of the present invention, different antenna elements are used for separately transmitting or receiving a radio-frequency signal, and the multichannel front-end includes w front-end channels; and
the front-end channel includes a filtering processing module, configured to perform filtering processing on one first radio-frequency signal in the w first radio-frequency signals or on one second radio-frequency signal in the w second radio-frequency signals.

With reference to the first aspect of the present invention, or the first implementation manner of the first aspect, or the second implementation manner of the first aspect, or the third implementation manner of the first aspect, in a fourth implementation manner of the first aspect, the multi-beam receiving network is specifically configured to perform beamforming processing on the n received signals generated by the multichannel front-end, to obtain the k received signal beams corresponding to the n received signals, wherein k is equal to n.

With reference to the first aspect of the present invention, or the first implementation manner of the first aspect, or the second implementation manner of the first aspect, or the third implementation manner of the first aspect, in a fifth implementation manner of the first aspect, the multi-beam receiving network includes:
a radio-frequency amplitude and phase control module, configured to perform amplitude adjustment and phase adjustment on the n received signals generated by the multichannel front-end; and
a beam combination module, configured to combine n amplitude-adjusted and phase-adjusted received signals into the k received signal beams, wherein k is greater than or equal to 1.

With reference to the first aspect of the present invention, or the first implementation manner of the first aspect, or the second implementation manner of the first aspect, or the third implementation manner of the first aspect, in a sixth implementation manner of the first aspect, the multi-beam receiving network includes:
a power division module, configured to split each of the n received signals generated by the multichannel front-end into k received signals; and
a beamforming module, configured to separately select one signal from the k received signals split from each of the n received signals for combination, so as to obtain the k received signal beams.

With reference to the first aspect of the present invention, or the first implementation manner of the first aspect, or the second implementation manner of the first aspect, or the third implementation manner of the first aspect, in a seventh implementation manner of the first aspect, the multi-beam transmitting network includes:
a bridge circuit, configured to perform combination on the j transmit signal beams; and
a phase-shift circuit, configured to perform phase adjustment on j combined transmit signal beams, to obtain the m transmit signals.

With reference to the first aspect of the present invention, or the first implementation manner of the first aspect, or the second implementation manner of the first aspect, or the third implementation manner of the first aspect, in an eighth implementation manner of the first aspect, the antenna further includes:
a low-noise amplification circuit, configured to amplify one received signal in the n received signals.

A second aspect of the present invention provides an active antenna system, including any antenna in the foregoing, a transceiver unit, and a receive and transmit channel processing unit; wherein
the transceiver unit is configured to: process the k received signal beams generated by the multi-beam receiving network, to obtain k corresponding digital signals, and output the k digital signals to the receive and transmit channel processing unit; and process j digital signals output by the receive and transmit channel processing unit, to obtain the j corresponding transmit signal beams; and
the receive and transmit channel processing unit is configured to: perform decoding processing on the k digital signals generated by the transceiver unit; and perform encoding processing on a signal sent by a signal source, to obtain the j digital signals, and output the j digital signals to the transceiver unit.

With reference to the second aspect of the present invention, in a first implementation manner of the second aspect, the transceiver unit includes k receiver modules corresponding to the k received signal beams and j transmitter modules corresponding to the j digital signals;
the receiver module is configured to process one received signal beam generated by the multi-beam receiving network, to obtain one corresponding digital signal; and
the transmitter module is configured to process one digital signal output by the receive and transmit channel processing unit, to obtain one corresponding transmit signal beam.

With reference to the first implementation manner of the second aspect of the present invention, in a second implementation manner of the second aspect of the present invention, the receive and transmit channel processing unit includes a receive channel processing module and a transmit channel processing module;
the receive channel processing module is configured to perform decoding processing on the k digital signals generated by the k receiver modules; and
the transmit channel processing module is configured to: perform encoding processing on the signal sent by the signal source, to obtain the j digital signals, and output the j digital signals respectively to the j corresponding transmitter modules.

It can be learned from the technical solutions that embodiments of the present invention have the following advantages: In a receiving direction, the multichannel front-end converts w first radio-frequency signals received by the w antenna elements into n received signals; and the multi-beam receiving network performs beamforming processing on the n received signals generated by the multichannel front-end, to obtain k received signal beams. In a transmission direction, the multi-beam transmitting network performs beamforming processing on j transmit signal beams, to obtain m transmit signals; and the multichannel front-end converts the m transmit signals obtained by the multi-beam transmitting network into the w second radio-frequency signals. Therefore, by using an asymmetrical antenna array structure formed by separating signal reception and signal transmission, complexity and power consumption of an antenna device are reduced, and production costs are reduced.

### BRIEF DESCRIPTION OF DRAWINGS

FIG. 1 is a schematic structural diagram of an active antenna system in the prior art;
FIG. 2 is a schematic structural diagram of an antenna according to an embodiment of the present invention;
FIG. 3 is a detailed schematic structural diagram of an antenna according to an embodiment of the present invention;
FIG. 4 is a schematic structural diagram of a multichannel front-end according to an embodiment of the present invention;
FIG. 5 is another schematic structural diagram of a multichannel front-end according to an embodiment of the present invention;
FIG. 6 is another schematic structural diagram of a multichannel front-end according to an embodiment of the present invention;
FIG. 7 is a schematic structural diagram of a front-end channel according to an embodiment of the present invention;
FIG. 8 is a schematic structural diagram of a multi-beam receiving network according to an embodiment of the present invention;
FIG. 9 is another schematic structural diagram of a multi-beam receiving network according to an embodiment of the present invention;
FIG. 10 is another schematic structural diagram of a multi-beam receiving network according to an embodiment of the present invention;
FIG. 11 is a schematic structural diagram of a multi-beam transmitting network according to an embodiment of the present invention;
FIG. 12 is a schematic structural diagram of an active antenna system according to an embodiment of the present invention; and
FIG. 13 is a detailed schematic structural diagram of an active antenna system according to an embodiment of the present invention.

### DESCRIPTION OF EMBODIMENTS

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by persons of ordinary skill in the art based on the embodiments of the present invention without creative efforts shall fall within the protection scope of the present invention.

Referring to FIG. 2, FIG. 2 is a schematic structural diagram of an antenna according to an embodiment of the present invention. The antenna includes:
an antenna array 21, a multichannel front-end 22, a multi-beam receiving network 23, and a multi-beam transmitting network 24.

The antenna array 21 includes w antenna elements, wherein the antenna element is configured to transmit or receive a radio-frequency signal, and w is a natural number greater than or equal to 2;
the multi-beam transmitting network 24 is configured to perform beamforming processing on j transmit signal beams, to obtain m transmit signals, wherein j is a natural number;
the multichannel front-end 22 is configured to: convert w first radio-frequency signals received by the w antenna elements into n received signals, and convert the m transmit signals obtained by the multi-beam transmitting network into w second radio-frequency signals, wherein both n and m are natural numbers less than or equal to w; and
the multi-beam receiving network 23 is configured to perform beamforming processing on the n received signals generated by the multichannel front-end 22, to obtain k received signal beams, wherein k is a natural number.

In this embodiment of the present invention, in a receiving direction, the multichannel front-end 22 converts the w first radio-frequency signals received by the w antenna elements into the n received signals; and the multi-beam receiving network 23 performs beamforming processing on the n received signals generated by the multichannel front-end 22, to obtain the k received signal beams. In a transmission direction, the multi-beam transmitting network 24 performs beamforming processing on the j transmit signal beams, to obtain the m transmit signals; and the multichannel front-end 22 converts the m transmit signals obtained by the multi-beam transmitting network 24 into the w second radio-frequency signals. Therefore, by using an asymmetrical antenna array structure formed by separating signal reception and signal transmission, complexity and power consumption of an antenna device are reduced, and production costs are reduced.

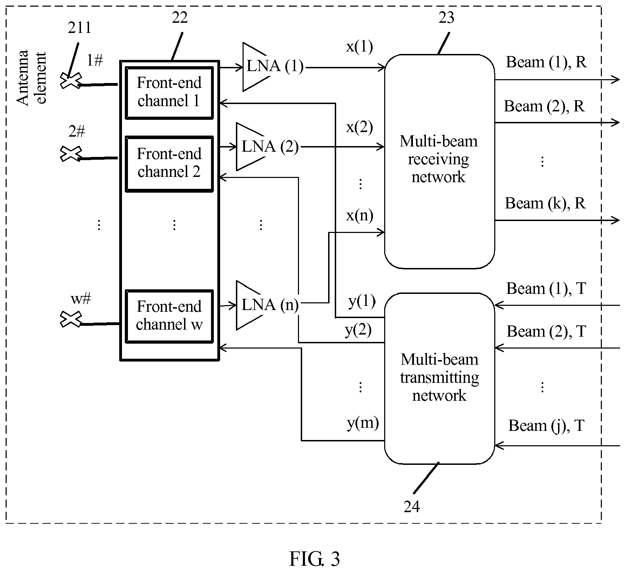

Referring to FIG. 3, FIG. 3 is a detailed schematic structural diagram of an antenna according to an embodiment of the present invention. The antenna array 21 includes at least two antenna elements 211. The antenna element 211 is configured to transmit and receive a radio-frequency signal. For a structure of the antenna element 211, refer to the prior art. The antenna elements 211 may be arranged in parallel on the antenna. This is not specifically described herein. When receiving a radio-frequency signal, the antenna array 21 converts received w first radio-frequency signals into n received signals (x(1) to x(n) shown in FIG. 3) by using the multichannel front-end 22; and when transmitting a radio-frequency signal, the antenna array 21 converts, by using the multichannel front-end 22, m transmit signals (y(1) to y(m) shown in FIG. 3) obtained by the multi-beam transmitting network 24 into w second radio-frequency signals, and then transmits the w second radio-frequency signals by using the w antenna elements 211, wherein w is a natural number greater than or equal to 2, and both n and m are natural numbers less than or equal to w. Each antenna element 211 may be a single antenna element 211, or may be a set of antenna elements 211. Each antenna element 211 receives or transmits one radio-frequency signal. In FIG. 3, only one polarization of the antenna element 211 is processed, to provide orthogonal signals and combine polarized signals in a receiving direction, so as to increase a receive signal-to-noise ratio. Processing of another polarization is the same. For a specific processing manner, refer to the prior art; and details are not described herein.

The multichannel front-end 22 separates a signal on a receive channel from a signal on a transmit channel. On the receive channel (that is, in the receiving direction), the w first radio-frequency signals received by the w antenna elements 211 are mapped (or combined) by using the multichannel front-end 22, to obtain the n received signals. The n received signals are amplified by using an LNA (Low Noise Amplifier, low noise amplifier), and then the n received signals are sent to the multi-beam receiving network 23. Each (or each set of) antenna element 211 can receive or transmit only one radio-frequency signal, and therefore, the w (or w sets of) antenna elements can receive or transmit only w radio-frequency signals. Therefore, on the transmit channel (that is, in a transmission direction), the m transmit signals output from the multi-beam transmitting network 24 are mapped (or combined) by using the multichannel front-end 22, to obtain the w second radio-frequency signals, so that the w antenna elements receive the w second radio-frequency signals, and transmit the w second radio-frequency signals outward.

For a specific structure of the multichannel front-end 22, refer to the following:

### 1. Manner in which receiving and transmitting share an antenna element

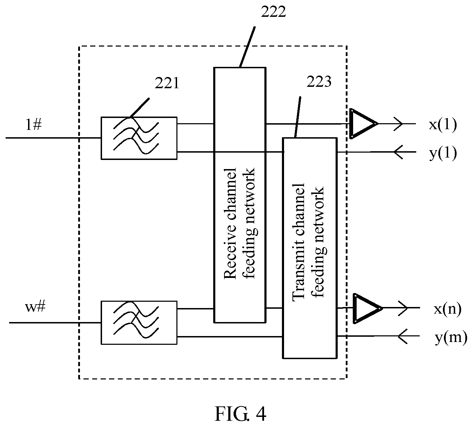

That receiving and transmitting share an antenna element means that a same antenna element is used for transmitting a radio-frequency signal or receiving a radio-frequency signal. Specifically, an antenna element 211 or a set of antenna elements 211 is used for both receiving a radio-frequency signal and transmitting a radio-frequency signal. Referring to FIG. 4, optionally, the multichannel front-end 22 includes:
a filtering processing module 221, configured to perform filtering processing on one first radio-frequency signal in the w first radio-frequency signals or on one second radio-frequency signal in the w second radio-frequency signals;
a receive channel feeding network 222, configured to: form a receive channel, and perform first mapping processing on the w first radio-frequency signals in a receiving direction, to obtain the n received signals; and
a transmit channel feeding network 223, configured to: form a transmit channel, and perform second mapping processing on the m transmit signals in a transmission direction, to obtain the w second radio-frequency signals.

For a specific structure of the filtering processing module 221, refer to a structure of a filter in the prior art, and the structure is not described herein. The filtering processing module 221 is configured to perform filtering processing on one first radio-frequency signal in the w first radio-frequency signals or on one second radio-frequency signal in the w second radio-frequency signals. This specifically includes: filtering interference, or performing out-of-band interference rejection and a low insertion loss on a transmitted spectrum, or isolating interference between a receive frequency and a transmit frequency, so that a useful signal passes with attenuation as little as possible, and a useless signal is attenuated as much as possible.

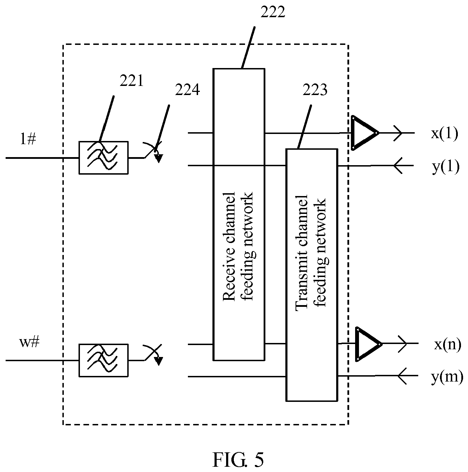

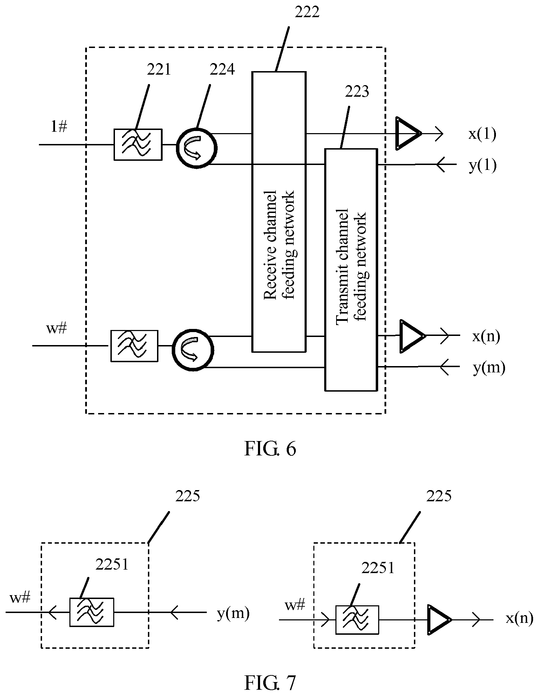

Referring to FIG. 5 and FIG. 6, optionally, the multichannel front-end 22 further includes:
a switch matrix 224, configured to switch, in a time-division manner, the w first radio-frequency signals in the receiving direction and the w second radio-frequency signals in the transmission direction.

The switch matrix 224 is configured to: switch, in a time-division manner, the w first radio-frequency signals in the receiving direction and the w second radio-frequency signals in the transmission direction; and when the w first radio-frequency signals in the receiving direction and the w second radio-frequency signals in the transmission direction share one (or one set of) antenna element, perform receive and transmit channel switching. The switch matrix 224 may be specifically implemented by using a radio-frequency switch or a circulator. FIG. 5 is an implementation manner by using a radio-frequency switch, and FIG. 6 is an implementation manner by using a circulator. In this embodiment, only two implementation manners are enumerated, and a selection of the switch matrix 224 is not limited herein.

### 2. Manner in which receiving and transmitting do not share an antenna element

That receiving and transmitting do not share an antenna element means that different antenna elements are used for separately transmitting a radio-frequency signal or receiving a radio-frequency signal. Specifically, a specific or a specific set of antenna elements 211 is used for only receiving a radio-frequency signal or used for only transmitting a radio-frequency signal. Referring to FIG. 7, optionally, the multichannel front-end 22 includes w front-end channels 225. FIG. 7 shows structural diagrams of the front-end channels 225 in the transmission direction (namely, a y(m) direction) and in the receiving direction (namely, an x(n) direction).

The w front-end channels are distributed in an array manner, and each front-end channel includes one filtering processing module 2251, configured to perform filtering processing on the radio-frequency signal.

For a specific structure of the filtering processing module 2251, refer to a structure of a filter in the prior art, and the structure is not described herein. The filtering processing module 2251 is configured to perform filtering processing on the radio-frequency signal, so that a useful signal passes with attenuation as little as possible, and a useless signal is attenuated as much as possible.

The implementation manner of the multichannel front-end 22 in the antenna is described in detail in the above, and the multi-beam receiving network 23 in the antenna is specifically described in the following.

Still referring to FIG. 3, for the multi-beam receiving network 23, refer to the following implementation manners.

### 1. Straight-through manner

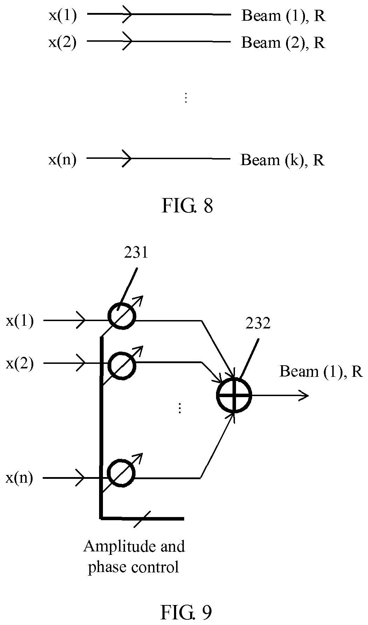

With reference to FIG. 3 and FIG. 8, optionally, in the straight-through manner, the multi-beam receiving network 23 is specifically configured to perform beamforming processing on the n received signals (x(1) to x(n)) generated by the multichannel front-end 22, to obtain the k received signal beams {(Beam (1), R) to (Beam (k), R)} corresponding to the n received signals, wherein k is equal to n. In this case, a receive and transmit channel processing unit 26 on a back-end performs beamforming processing on the received signal beams.

### 2. Hybrid manner

With reference to FIG. 3 and FIG. 9, optionally, in the hybrid manner, the multi-beam receiving network 23 includes:
a radio-frequency amplitude and phase control module 231, configured to perform amplitude adjustment and phase adjustment on the n received signals generated by the multichannel front-end 22; and
a beam combination module 232, configured to combine n amplitude-adjusted and phase-adjusted received signals into the k received signal beams, wherein k is greater than or equal to 1.

It should be noted that in the hybrid manner, amplitudes and phases of the received signals are adjusted by using an RF (Radio Frequency, radio frequency) amplitude and phase controller in the radio-frequency amplitude and phase control module 231, then the received signals are combined to obtain the received signal beams by using the beam combination module 232, and the received signal beams are sent to the receive and transmit channel processing unit 26 on the back-end for processing. In the implementation manner described in FIG. 9, the radio-frequency amplitude and phase control module 231 performs amplitude adjustment and phase adjustment on the n received signals generated by the multichannel front-end 22; and the beam combination module 232 combines n amplitude-adjusted and phase-adjusted received signals into one received signal beam, wherein the n received signals are signals received by n (or n sets of) antenna elements. In FIG. 9, only an example in which the n received signals (x(1) to x(n)) are combined into one received signal beam is described. A quantity of received signal beams may be single (one) or multiple, and this is not limited herein.

### 3. Passive manner

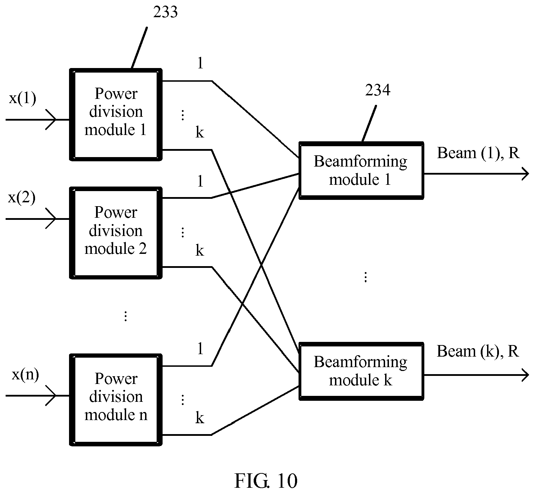

With reference to FIG. 3 and FIG. 10, optionally, in the passive manner, the multi-beam receiving network 23 includes:
a power division module 233, configured to split each of the n received signals generated by the multichannel front-end 22 into k received signals; and
a beamforming module 234, configured to separately select one signal from the k received signals split from each of the n received signals for combination, so as to obtain the k received signal beams.

It should be noted that in the passive manner, the power division module 233 splits each of the n received signals generated by the multichannel front-end 22 into k received signals; and the beamforming module 234 separately selects one signal from the k received signals split from each of the n received signals for combination, so as to obtain the k received signal beams. In the implementation manner described in FIG. 10, n power division modules 233 (a power division module 1 to a power division module n shown in FIG. 10) respectively split the n received signals (x(1) to x(n)) generated by the multichannel front-end 22 into k received signals (1 to k); and each of k beamforming modules 234 (a beamforming module 1 to a beamforming module k shown in FIG. 10) selects one signal from the k received signals split from each of the n received signals for combination. It may be that the first to the kth received signals split from each of the n received signals are combined into the k received signal beams {(Beam (1), R) to (Beam (k), R) shown in FIG. 10}, or may be combined in a hybrid manner, wherein k is a natural number, and a quantity of k received signal beams may be one or multiple.

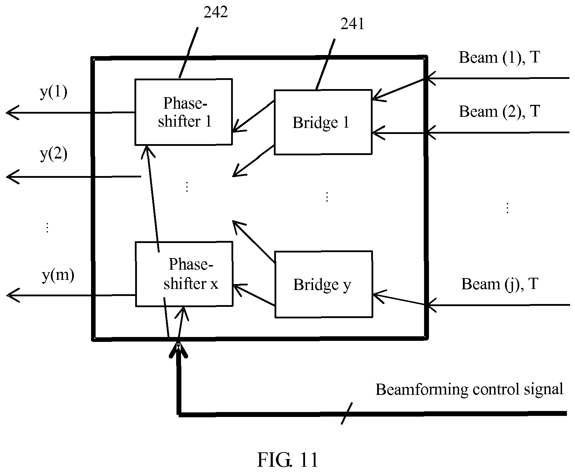

With reference to FIG. 3 and FIG. 11, the multi-beam transmitting network 24 includes:
a bridge circuit 241, configured to perform combination on the j transmit signal beams; and
a phase-shift circuit 242, configured to perform phase adjustment on j combined transmit signal beams, to obtain the m transmit signals.

It should be noted that bridge circuits 241 (a bridge 1 to a bridge y shown in FIG. 11) respectively perform combination on the j transmit signal beams {(Beam (1), T) to (Beam (k), T)}; and phase-shift circuits 242 (a phase-shifter 1 to a phase-shifter x) perform, according to a beamforming control signal, phase adjustment on the j combined transmit signal beams, to obtain the m corresponding transmit signals (y(1) to y(m) shown in FIG. 11). Quantities of x and y in the FIG. 11 may be set according to a system requirement, and are not limited herein.

The specific structure of the antenna is described in detailed in the above, and with reference to the antenna, an active antenna system including the antenna is described in the following.

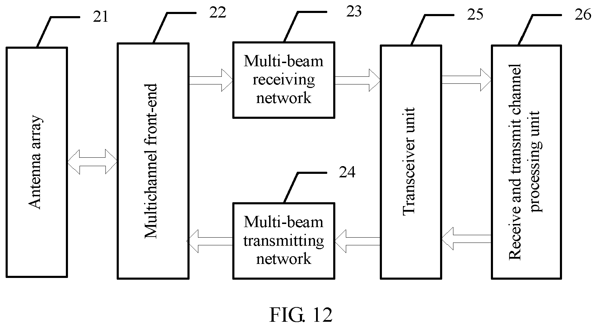

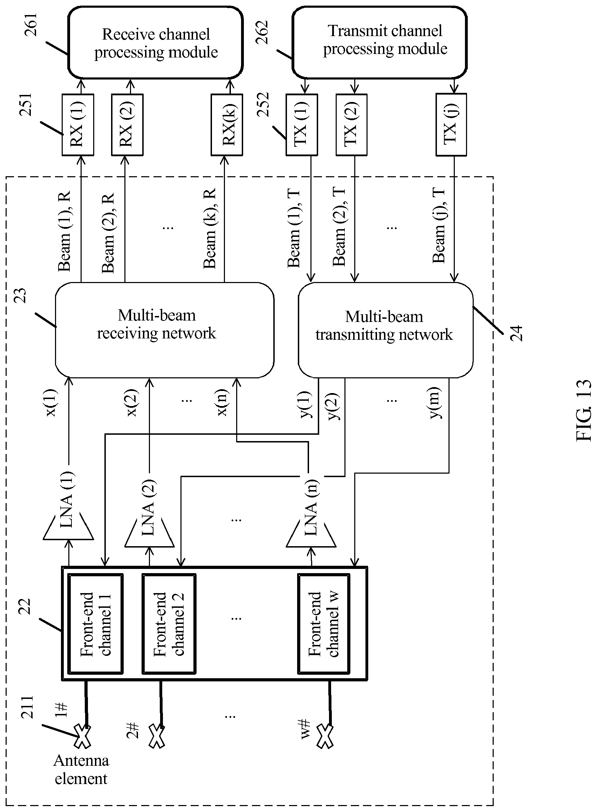

FIG. 12 is a schematic structural diagram of an active antenna system according to an embodiment of the present invention. FIG. 13 is a detailed schematic structural diagram of an active antenna system according to an embodiment of the present invention. The active antenna system is described with reference to the accompanying drawings.

The active antenna system provided in this embodiment of the present invention includes the antenna in the foregoing embodiments, a transceiver unit 25, and a receive and transmit channel processing unit 26.

The transceiver unit 25 is configured to: process the k received signal beams generated by the multi-beam receiving network 23, to obtain k corresponding digital signals, and output the k digital signals to the receive and transmit channel processing unit 23; and process j digital signals output by the receive and transmit channel processing unit 26, to obtain j corresponding transmit signal beams; and
the receive and transmit channel processing unit 26 is configured to: perform decoding processing on the k digital signals generated by the transceiver unit 25; and perform encoding processing on a signal sent by a signal source, to obtain the j digital signals and output the j digital signals to the transceiver unit 25.

In this embodiment of the present invention, in a receiving direction, the multichannel front-end 22 converts w first radio-frequency signals received by the w antenna elements into n received signals; the multi-beam receiving network 23 performs beamforming processing on the n received signals generated by the multichannel front-end 22, to obtain k received signal beams; the transceiver unit 25 processes the k received signal beams generated by the multi-beam receiving network 23, to obtain k corresponding digital signals, and outputs the k digital signals to the receive and transmit channel processing unit 26; and the receive and transmit channel processing unit 26 performs decoding processing on the k digital signals generated by the transceiver unit 25. In a transmission direction, the receive and transmit channel processing unit 26 performs encoding processing on the signal sent by the signal source, to obtain the j digital signals, and outputs the j digital signals to the transceiver unit 25; the transceiver unit 25 processes the j digital signals output by the receive and transmit channel processing unit 26, to obtain the j corresponding transmit signal beams; the multi-beam transmitting network 24 performs beamforming processing on the j transmit signal beams, to obtain m transmit signals; and the multichannel front-end 22 converts the m transmit signals obtained by the multi-beam transmitting network 24 into the w second radio-frequency signals. Therefore, by using an asymmetrical antenna array structure formed by separating signal reception and signal transmission, complexity and power consumption of an antenna device are reduced, and production costs are reduced.

Further, in this embodiment of the present invention, the transceiver unit 25 includes k receiver modules 251 corresponding to the k received signal beams and j transmitter modules 252 corresponding to the j digital signals;
the receiver module 251 is configured to process one received signal beam generated by the multi-beam receiving network 23, to obtain one corresponding digital signal; and
the transmitter module 252 is configured to process one digital signal output by the receive and transmit channel processing unit 26, to obtain one corresponding transmit signal beam.

It should be noted that as shown in FIG. 13, the k receiver modules 251 (RX(1) to RX(k)) respectively process the k received signal beams {(Beam (1), R) to (Beam (k), R)}, to obtain the k corresponding digital signals. A processing process mainly includes: performing amplification, filtering, frequency conversion, analog-to-digital conversion, digital intermediate frequency processing, and the like on the received signal beam. For details, refer to the prior art, and details are not described herein. As shown in FIG. 13, the j transmitter modules 252 (TX(1) to TX(j)) respectively process the j digital signals output by the receive and transmit channel processing unit 26, to obtain the j corresponding transmit signal beams {(Beam (1), T) to (Beam (k), T)}. A processing process mainly includes performing digital-to-analog conversion, frequency conversion, filtering, and the like on the digital signal, and this is not specifically described herein.

Still referring to FIG. 13, the receive and transmit channel processing unit 26 includes a receive channel processing module 261 and a transmit channel processing module 262.

The receive channel processing module 261 is configured to perform decoding processing on the k digital signals generated by the k receiver modules 251; and
the transmit channel processing module 262 is configured to perform encoding processing on the signal sent by the signal source, to obtain the j digital signals, and output the j digital signals respectively to the j corresponding transmitter modules 252.

It should be noted that the receive channel processing module 261 performs decoding processing on the k digital signals generated by the k receiver modules 251. A processing process mainly includes digital baseband processing, specifically: demodulation and decoding, so as to obtain a signal meeting a system requirement. The transmit channel processing module 262 performs encoding processing on the signal sent by the signal source, to obtain the j digital signals, and outputs the j digital signals respectively to the j corresponding transmitter modules 252. The signal source is a base station, and after performing encoding processing on the signal sent by the base station, the transmit channel processing module outputs a digital signal obtained by means of encoding to a corresponding transmitter module 252.

Processes of receiving a radio-frequency signal and transmitting a radio-frequency signal of the active antenna system provided in this embodiment of the present invention are as follows:
When receiving a radio-frequency signal, the w antenna elements 211 in the antenna convert received w first radio-frequency signals into n received signals by using the multichannel front-end 22; the multi-beam receiving network 23 performs beamforming processing on the n received signals generated by the multichannel front-end 22, to obtain k received signal beams; the transceiver unit 25 processes the k received signal beams generated by the multi-beam receiving network 23, to obtain k corresponding digital signals, and outputs the k digital signals to the receive and transmit channel processing unit 26; the receive and transmit channel processing unit 26 performs decoding processing on the k digital signals generated by the transceiver unit 25; and finally, k decoded digital signals are transmitted to a BBU (Base Band Unit, baseband unit).

When transmitting a radio-frequency signal, the receive and transmit channel processing unit 26 performs encoding processing on a signal sent by a signal source, to obtain the j digital signals, and outputs the j digital signals to the transceiver unit 25; the transceiver unit 25 processes the j digital signals output by the receive and transmit channel processing unit 26, to obtain j corresponding transmit signal beams; the multi-beam transmitting network 24 performs beamforming processing on the j transmit signal beams generated by the transceiver unit 25, to obtain m transmit signals; the multichannel front-end 22 converts the m transmit signals obtained by the multi-beam transmitting network 24 into the w second radio-frequency signals; and finally, the w antenna elements respectively transmit the w second radio-frequency signals.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An antenna, comprising: an antenna array, a multichannel front-end, a multi-beam receiving network, and a multi-beam transmitting network, wherein
the antenna array comprises w antenna elements, the antenna element is configured to transmit or receive a radio-frequency signal, and w is a natural number greater than or equal to 2;
the multi-beam transmitting network is configured to perform beamforming processing on j transmit signal beams, to obtain m transmit signals, j is a natural number;
the multichannel front-end is configured to: convert w first radio-frequency signals received by the w antenna elements into n received signals, and convert the m transmit signals obtained by the multi-beam transmitting network into w second radio-frequency signals, wherein both n and m are natural numbers less than or equal to w; and
the multi-beam receiving network is configured to perform beamforming processing on the n received signals generated by the multichannel front-end, to obtain k received signal beams, wherein k is a natural number.

2. The antenna according to claim 1, wherein a same antenna element is used for transmitting or receiving a radio-frequency signal; and the multichannel front-end comprises:
a filtering processing module, configured to perform filtering processing on one first radio-frequency signal in the w first radio-frequency signals or on one second radio-frequency signal in the w second radio-frequency signals;
a receive channel feeding network, configured to: form a receive channel, and perform first mapping processing on the w first radio-frequency signals in a receiving direction, to obtain the n received signals; and
a transmit channel feeding network, configured to: form a transmit channel, and perform second mapping processing on the m transmit signals in a transmission direction, to obtain the w second radio-frequency signals.

3. The antenna according to claim 2, wherein the multichannel front-end further comprises:
a switch matrix, configured to switch, in a time-division manner, the w first radio-frequency signals in the receiving direction and the w second radio-frequency signals in the transmission direction.

4. The antenna according to claim 1, wherein different antenna elements are used for separately transmitting or receiving a radio-frequency signal, and the multichannel front-end comprises w front-end channels; and
each front-end channel comprises a filtering processing module, configured to perform filtering processing on one first radio-frequency signal in the w first radio-frequency signals or on one second radio-frequency signal in the w second radio-frequency signals.

5. The antenna according to any one of claims 1 to 4, wherein the multi-beam receiving network is specifically configured to perform beamforming processing on the n received signals generated by the multichannel front-end, to obtain the k received signal beams corresponding to the n received signals, wherein k is equal to n.

6. The antenna according to any one of claims 1 to 4, wherein the multi-beam receiving network comprises:
a radio-frequency amplitude and phase control module, configured to perform amplitude adjustment and phase adjustment on the n received signals generated by the multichannel front-end; and
a beam combination module, configured to combine n amplitude-adjusted and phase-adjusted received signals into the k received signal beams, wherein k is greater than or equal to 1.

7. The antenna according to any one of claims 1 to 4, wherein the multi-beam receiving network comprises:
a power division module, configured to split each of the n received signals generated by the multichannel front-end into k received signals; and
a beamforming module, configured to separately select one signal from the k received signals split from each of the n received signals for combination, so as to obtain the k received signal beams.

8. The antenna according to any one of claims 1 to 4, wherein the multi-beam transmitting network comprises:
a bridge circuit, configured to perform combination on the j transmit signal beams; and
a phase-shift circuit, configured to perform phase adjustment on j combined transmit signal beams, to obtain the m transmit signals.

9. The antenna according to any one of claims 1 to 4, wherein the antenna further comprises:
a low-noise amplification circuit, configured to amplify one received signal in the n received signals.

10. An active antenna system, comprising the antenna according to any one of claims 1 to 9, a transceiver unit, and a receive and transmit channel processing unit; wherein
the transceiver unit is configured to: process the k received signal beams generated by the multi-beam receiving network, to obtain k corresponding digital signals, and output the k digital signals to the receive and transmit channel processing unit; and process j digital signals output by the receive and transmit channel processing unit, to obtain the j corresponding transmit signal beams; and
the receive and transmit channel processing unit is configured to: perform decoding processing on the k digital signals generated by the transceiver unit; and perform encoding processing on a signal sent by a signal source, to obtain the j digital signals, and output the j digital signals to the transceiver unit.

11. The active antenna system according to claim 10, wherein the transceiver unit comprises k receiver modules corresponding to the k received signal beams and j transmitter modules corresponding to the j digital signals;
the receiver module is configured to process one received signal beam generated by the multi-beam receiving network, to obtain one corresponding digital signal; and
the transmitter module is configured to process one digital signal output by the receive and transmit channel processing unit, to obtain one corresponding transmit signal beam.

12. The active antenna system according to claim 11, wherein the receive and transmit channel processing unit comprises a receive channel processing module and a transmit channel processing module;
the receive channel processing module is configured to perform decoding processing on the k digital signals generated by the k receiver modules; and
the transmit channel processing module is configured to: perform encoding processing on the signal sent by the signal source, to obtain the j digital signals, and output the j digital signals respectively to the j corresponding transmitter modules.
